# EUROPÄISCHE PATENTSCHRIFT

(11) **EP 2 415 641 B1**
(45) Veröffentlichungstag und Bekanntmachung des Hinweises auf die Patenterteilung: **31.10.2012**
(21) Anmeldenummer: 10171723.9
(22) Anmeldetag: 03.08.2010
(51) Int. Cl.: B60R 1/06

(54) **Dichtung und Außenrückblickspiegelanordnung**
Seal and external rear view mirror assembly
Joint et agencement de rétroviseur extérieur

(43) Veröffentlichungstag der Anmeldung: 08.02.2012
(73) Patentinhaber: SMR Patents S.à.r.l., 1653 Luxembourg (LU)
(72) Erfinder: Szmolenszki, Istvan, 71409, Schwaikheim (DE); Herrmann, Andreas, 71364, Winnenden-Baach (DE)
(74) Vertreter: Weber-Bruls, Dorothée

(56) Entgegenhaltungen:
- DE-A1- 19 954 082
- JP-A- 2001 233 126
- US-A- 4 936 537
- US-A- 5 889 624

## Beschreibung

Die Erfindung betrifft eine Außenrückblickspiegelanordnung mit einer Dichtung gegenüber einer Karosserie oder einem Karosserieteil eines Kraftfahrzeugs gemäß dem Oberbegriff des Anspruchs 1.

Eine Außenrückblickspiegelanordnung für ein Kraftfahrzeug besteht beispielsweise aus einem an dem Kraftfahrzeug angeordneten Spiegelfuß, welcher mittels einer Spiegelfußabdeckung verkleidet sein kann, und einem an dem Spiegelfuß angeordneten Außenrückblickspiegel. Der Außenrückblickspiegel umfasst ein Außenrückblickspiegelgehäuse, welches unter anderem einen dem Spiegelfuß zugeordneten Grundträger beherbergt.

Spiegelfuß und Grundträger sind gelenkig miteinander verbunden, so dass der Außenrückblickspiegel gegenüber dem Spiegelfuß aus einer Betriebsstellung in eine Anklappstellung und umgekehrt um eine Gelenkachse verschwenkbar ist. Spiegelfuß und Grundträger können als Druckgussteile beispielsweise aus dem selben Werkstoff hergestellt sein.

Auf dem Grundträger ist eine beispielsweise elektromotorisch betätigbare Verstellanordnung für ein Spiegelglas angeordnet. Die Verstellanordnung wirkt auf eine Trägerplatte ein, auf der das Spiegelglas angeordnet ist. Das Spiegelglas kann mittels einer Klebeverbindung auf der Trägerplatte montiert sein. Die Trägerplatte kann an der Verstellanordnung und/oder an der Grundplatte geführt und/oder gelagert sein. Unter dem Begriff Trägerplatte ist hierbei jegliche Art von Träger zu verstehen, der zumindest eine eben oder gewölbt ausgeführte, geschlossene oder gitterförmig unterbrochene, z.B. wabenförmige Trägerfläche aufweist, die geeignet ist, um darauf ein Spiegelglas etwa mittels einer Klebeverbindung oder durch Einklipsen z.B. hinter am Umfang der Trägerfläche hervorstehende und vom Umfang aus gesehen nach Innen zur Mitte der Trägerfläche hin kragende Rastmittel zu befestigen.

Das Außenrückblickspiegelgehäuse weist auf seiner in Betriebsstellung der Fahrtrichtung des Kraftfahrzeugs abgewandten Rückseite eine Öffnung auf, durch welche hindurch das Spiegelglas sichtbar ist bzw. in welcher das Spiegelglas angeordnet ist. Um eine Verstellbarkeit des Spiegelglases zu gewährleisten, ist allseitig zwischen Spiegelglas bzw. Trägerplatte und den die Öffnung umgebenden Wandungen des Außenrückblickspiegelgehäuses ein Abstand eingehalten, so dass sich um das Spiegelglas umlaufend ein Spalt zu den die Öffnung umgebenden Wandungen des Außenrückblickspiegelgehäuses ergibt.

Der Außenrückblickspiegel kann neben oder anstelle eines elektromotorisch verstellbaren Spiegelglases eine oder mehrere weitere elektrische Komponenten beherbergen. Beispiele für solche elektrische Komponenten sind:
- eine Wiederholblinkleuchte,
- eine Einstiegsleuchte,
- ein beheizbares Spiegelglas,
- ein elektrochromatisch abblendbares Spiegelglas,
- ein Erfassungs- und/oder Warnanzeigemodul für eine Fahrassistenzvorrichtung, wie etwa eine Totwinkelüberwachung, eine Spurverlasswarnung, eine Annäherungsüberwachung, oder dergleichen,
- einen Sensor zur Erfassung von Fahr- und/oder Umgebungszuständen, wie beispielsweise Temperatur, Helligkeit, Verschmutzungsgrad, Beleuchtungssituation, beispielsweise um das Spiegelglas automatisch zu beheizen und/oder z.B. elektrochromatisch abzublenden.

Darüber hinaus kann der Außenrückblickspiegel eine oder mehrere Kombinationen der beispielhaft angeführten elektrischen Komponenten aufweisen.

Die elektrischen Komponenten im Außenrückblickspiegel sind mittels einer elektrischen Verbindung durch den Spiegelfuß hindurch mit einer kraftfahrzeugseitigen Stromversorgung und/oder mit einem kraftfahrzeugseitigen Steuergerät beispielsweise über ein Bordnetz und/oder ein Bussystem verbunden. Die elektrische Verbindung besteht beispielsweise aus einem Kabelbaum mit mehreren Kabeln, gegebenenfalls jeweils gesonderten Steckverbindungen zum elektrischen Anschluss der elektrischen Komponenten jeweils einzeln oder gruppenweise und wenigstens einer elektrischen Steckverbindung zur weiterführenden elektrischen Kontaktierung kraftfahrzeugseitig.

Um hohen Qualitätsanforderungen in der Automobilindustrie gerecht zu werden, ist bekannt, Hohlräume in der Karosserie oder in Karossereiteilen oder in Abschnitten der Karosserie oder der Karossereiteile zu verschließen oder abzuschließen und/oder zu versiegeln, beispielsweise um das Eindringen von Schmutz und/oder Feuchtigkeit zu vermeiden. Ebenfalls bekannt ist, beispielsweise für eine Durchführung eines Kabelbaums vorgesehene Öffnungen in der Karosserie oder in Karossereiteilen zu verschließen, so dass kein Schmutz und/oder keine Feuchtigkeit unerwünscht durch diese Öffnungen hindurchtreten kann.

Zur Anbringung einer Außenrückblickspiegelanordnung an eine Karosserie oder ein Karosserieteil eines Kraftfahrzeugs kann deshalb vorgesehen sein, den Spiegelfuß sowie gegebenenfalls die Spiegelfußabdeckung gegen das Kraftfahrzeug abzudichten. Hierzu ist bekannt, zumindest eine Partie der karosserieseitig anliegenden Fläche des Spiegelfußes mit einer Dichtung in Form einer auch als Dichtpad bezeichneten mattenartigen Unterlage zu versehen. Das Dichtpad kann aus einem aufgeschäumten Werkstoff bestehen. Bei der Partie der karosserieseitig anliegenden Fläche des Spiegelfußes handelt es sich beispielsweise um einen um den kraftfahrzeugseitigen Austritt eines Kabelbaums aus dem Spiegelfuß herumliegenden Flächenabschnitt.

Beispielsweise um ein Verkratzen der Karosserie oder eines Karosserieteils bei der Montage einer Außenrückblickspiegelanordnung zu vermeiden kann alternativ oder zusätzlich vorgesehen sein, wenigstens die karosserieseitig anliegenden Flächen des Spiegelfußes und/oder der Spiegelfußabdeckung mit einer beispielsweise gummiartigen, elastischen Unterlage zu versehen, welche im fertig montierten Zustand zwischen der Karosserie bzw. dem Karosserieteil und dem Spiegelfuß und/oder der Spiegelfußabdeckung verbleibt. Im Folgenden wird eine zu einem solchen beschriebenen Zweck dienende Unterlage ebenfalls als eine Dichtung bezeichnet.

Nachteilig an dem bekannten Stand der Technik ist, dass eine zu einem obigen Zweck dienende, wenigstens eine Partie einer karosserieseitig zur Anlage kommende Fläche eines Spiegelfußes und/oder einer Spiegelfußabdeckung abdeckende Dichtung vor oder während der Montage einer Außenrückblickspiegelanordnung an eine Karosserie oder ein Karosserieteil eines Kraftfahrzeugs verloren oder vergessen werden kann.

Darüber hinaus besteht die Gefahr, dass die Dichtung bei der Anordnung auf der wenigstens einen Partie der karosserieseitig zur Anlage kommenden Fläche beispielsweise in Bezug auf eine seitenrichtige und verdrehrichtige Lage sowie Position falsch oder fehlerhaft montiert wird.

Die JP 2001 233 126 A offenbart eine Außenrückblickspiegelanordnung gemäß dem Oberbegriff des Anspruchs 1.

Eine Aufgabe der Erfindung ist die Schaffung einer verbesserten Dichtung einer Außenrückblickspiegelanordnung gegenüber einem Karosserieteil eines Kraftfahrzeugs, welche Dichtung wenigstens eine Partie einer karosserieseitig zur Anlage kommende Fläche eines Spiegelfußes und/oder einer Spiegelfußabdeckung abdeckt.

Die Aufgabe wird gelöst durch die Merkmale des unabhängigen Anspruchs 1.

Ein erster Gegenstand der Erfindung betrifft demnach eine Außenrückblickspiegelanordnung mit einer Dichtung eines Teils der Außenrückblickspiegelanordnung gegenüber einem Karosserieteil eines Kraftfahrzeugs. Die Dichtung ist zur Abdeckung wenigstens einer Partie mindestens einer karosserieseitig zur Anlage kommenden Fläche eines Spiegelfußes und/oder einer Spiegelfußabdeckung vorgesehen. In einem am Kraftfahrzeug fertig montierten Zustand der Außenrückblickspiegelanordnung befindet sich die Dichtung zwischen dem Karosserieteil des Kraftfahrzeugs und dem Spiegelfuß und/oder der Spiegelfußabdeckung der Außenrückblickspiegelanordnung. Der Begriff Karosserieteil umfasst hierbei sowohl die Karosserie eines Kraftfahrzeugs als Ganzes, als auch jegliche zur Karosserie zählenden Teile eines Kraftfahrzeugs, wie etwa Türen, Hauben, Deckel, Chassis etc. für sich allein, als auch Abschnitte bzw. Partien der Karosserie oder deren Teile.

Die Dichtung ist mittels wenigstens einer Lasche verliersicher mit dem Spiegelfuß und/oder der Spiegelfußabdeckung verbunden. Dabei ist die Dichtung bereits in einem am Kraftfahrzeug unmontierten Zustand der Außenrückblickspiegelanordnung, bevor der gegebenenfalls mit einer Spiegelfußabdeckung verkleidete Spiegelfuß karosserieseitig am Kraftfahrzeug montiert wird, mittels wenigstens einer Lasche verliersicher mit dem Spiegelfuß und/oder der Spiegelfußabdeckung verbunden.

Die zumindest eine Lasche bildet eine scharnierartige gelenkige Verbindung zwischen der Dichtung und dem Spiegelfuß oder der Spiegelfußabdeckung bzw. zwischen der Dichtung und dem Spiegelfuß und der Spiegelfußabdeckung. Die gelenkige Verbindung umfasst wenigstens eine zu der karosserieseitig zur Anlage kommenden Fläche beispielsweise an deren Rand oder außerhalb benachbart verlaufende Scharnierachse. Die Dichtung ist vorzugsweise lagerichtig und positionsgenau um die mindestens eine Scharnierachse auf die zumindest abzudeckende Partie der mindestens einen karosserieseitig zur Anlage kommende Fläche klappbar.

Im Idealfall bildet die mindestens eine Lasche dabei genau eine in ihrer Position und Orientierung gegenüber der mindestens einen karosserieseitig zur Anlage kommenden Fläche definierte Scharnierachse. Zum Toleranzausgleich ist es jedoch sinnvoll, die mindestens eine Lasche derart auszugestalten, dass sie eine Schaar von Scharnierachsen verwirklicht, wodurch unter anderem auch unterschiedliche Bewegungsabläufe während der Montage ermöglicht werden, um die Dichtung auf die abzudeckende Partie der mindestens einen karosserieseitig zur Anlage kommenden Fläche zu klappen. Dabei kann jede Scharnierachse der Schaar beispielsweise innerhalb durch die mindestens eine Lasche vorgegebenen Grenzen unterschiedliche Positionen und/oder Orientierungen gegenüber der mindestens einen karosserieseitig zur Anlage kommenden Fläche einnehmen. Hierdurch kann der Montagevorgang insbesondere im Hinblick auf innerhalb gewisser Grenzen liegender Toleranzen wesentlich vereinfacht werden.

Die wenigstens eine Lasche bildet somit ein scharnierartiges Gelenk, um welches die Dichtung um die mindestens eine beispielsweise am Rand oder außerhalb der zumindest einen karosserieseitig anliegenden Fläche verlaufende Scharnierachse zumindest auf die abzudeckende Partie der zumindest einen karosserieseitig anliegenden Fläche klappbar ist.

Die Dichtung besteht vorzugsweise aus einem elastischen Werkstoff oder Werkstoffmix. Der Begriff Werkstoffmix umfasst hierbei sowohl homogene, als auch inhomogene sowie beispielsweise zumindest abschnittsweise, z.B. im Bereich der Dichtung und/oder der mindestens einen Lasche faserverstärkte Werkstoffe, Werkstoffmischungen und Werkstoffkombinationen.

Vorzugsweise sind die Dichtung und die mindestens eine Lasche aus dem selben Werkstoff oder Werkstoffmix hergestellt. Der Werkstoff oder Werkstoffmix kann dabei wenigstens im Bereich der Dichtung aufgeschäumt sein.

Die Erfindung eignet sich sowohl für türbrüstungsmontierte, als auch für spiegeldreieckmontierte Außenrückblickspiegelanordnungen.

Die mindestens eine Lasche definiert dabei zumindest eine Scharnierachse, um welche die Dichtung auf die wenigstens eine karosserieseitig zur Anlage kommende Fläche geklappt werden kann. Die mindestens eine Lasche kann dabei so lang ausgebildet sein, dass sie bei auf die zumindest abzudeckende Partie der wenigstens einen karosserieseitig zur Anlage kommenden Fläche geklappter Dichtung in an dem Karosserieteil montiertem Zustand des Teils der Außenrückblickspiegelanordnung nicht oder zumindest nicht merklich bzw. nicht störend über die äußere Kontur der Spiegelfußabdeckung innerhalb der wenigstens einen an dem Karosserieteil zur Anlage kommenden Fläche herausragt.

Eine vorteilhafte Ausgestaltung der Erfindung sieht vor, dass die Dichtung mittels der wenigstens einen Lasche mit einer Spiegelfußabdeckung verliersicher verbunden ist. Spiegelfußabdeckung und Dichtung können beispielsweise in einem Zwei- oder Mehrkomponentenspritzgussverfahren einstückig hergestellt sein. Vorteile gegenüber dem Stand der Technik ergeben sich hierbei dadurch, dass nur ein Werkzeug zur Herstellung der Spiegelfußabdeckung und der Dichtung benötigt wird. Da jede Produktionslinie eine nur endliche Anzahl von Spritzgussmaschinen aufweist bedeutet dies eine erhebliche Verbesserung der Produktivität verbunden mit erheblichen Kosteneinsparungen bei der Herstellung. Durch das Anspritzen der Dichtung an die Spiegelfußabdeckung wird darüber hinaus die Montage vereinfacht, da zum einen die mittels der wenigstens einen Lasche mit der Spiegelfußabdeckung verbundene Dichtung nicht mehr verloren werden kann, und zum anderen die Dichtung zur Herstellung einer Verliersicherung nicht in einem eigens hierfür vorgesehenen Arbeitsvorgang mittels der mindestens einen Lasche an der Spiegelfußabdeckung und/oder am Spiegelfuß befestigt werden muss.

Wichtig ist hervorzuheben, dass die eine oder mehrere die Dichtung und die Spiegelfußabdeckung und/oder den Spiegelfuß verliersicher miteinander verbindenden Laschen integral an die Dichtung und vorzugsweise ebenso integral an die Spiegelfußabdeckung und/oder den Spiegelfuß angeformt sind.

Es ist ersichtlich, dass die Erfindung beispielsweise durch eine Spiegelfußabdeckung verwirklicht sein kann, an der eine Dichtung, welche zur Abdeckung mindestens einer Partie zumindest einer karosserieseitig zur Anlage kommenden Fläche eines Spiegelfußes und/oder der Spiegelfußabdeckung vorgesehen ist, aus einem elastischen Werkstoff oder Werkstoffmix mittels wenigstens einer Lasche vorzugsweise einstückig beispielsweise durch Anspritzen verliersicher befestigt ist.

Die Erfindung erlaubt alternativ eine Verwirklichung durch einen Spiegelfuß, an dem eine aus einem elastischen Werkstoff oder Werkstoffmix bestehende Dichtung, welche zur Abdeckung mindestens einer Partie zumindest einer karosserieseitig zur Anlage kommenden Fläche des Spiegelfußes und/oder einer Spiegelfußabdeckung vorgesehen ist, mittels wenigstens einer Lasche verliersicher befestigt ist. Auch hier kann die Befestigung durch Anspritzen hergestellt sein, sofern der Spiegelfuß aus einem hierfür geeigneten Material besteht.

Vorteile der Erfindung gegenüber dem Stand der Technik ergeben sich unter Anderem dadurch, dass die die Dichtung mit der Spiegelfußabdeckung und/oder dem Spiegelfuß verbindende Lasche eine Verliersicherung für die Dichtung beim Umgang vor und während der Montage einer Außenrückblickspiegelanordnung z.B. während deren Zusammenbaus oder während deren Anordnung an einem Kraftfahrzeug bildet.

Weitere Vorteile der Erfindung gegenüber dem Stand der Technik ergeben sich dadurch, dass bei einer entsprechenden Ausgestaltung einer Lasche, z.B. durch eine entlang der Scharnierachse relativ ausgedehnte Ausgestaltung ähnlich einem Filmscharnier, oder durch Verwendung zweier oder mehrerer Laschen eine Verdrehsicherung erhalten wird. Die Verdrehsicherung verhindert beim Aufeinanderklappen der Dichtung auf die zumindest abzudeckende Partie der wenigstens einen karosserieseitig zur Anlage kommenden Fläche eine in Bezug auf Lage, Position, Orientierung und Ausrichtung fehlerhafte Anordnung der Dichtung auf der wenigstens einen karosserieseitig zur Anlage kommenden Fläche. Dieser Vorteil der Erfindung macht sich insbesondere gegenüber dem Stand der Technik bemerkbar, bei dem es während der Montage häufig zu einer in Bezug auf Lage, Position, Orientierung und Ausrichtung fehlerhaften Anordnung oder gar zu einem Vergessen oder Weglassen der Dichtung kommt.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigen in schematischer Darstellung:
- Fig. 1: eine perspektivische Ansicht eines Spiegelfußes (Fig. 1 a) einer Spiegelfußabdeckung (Fig. 1 b) und einer eine karosserieseitig zur Anlage kommende Fläche des Spiegelfußes und der Spiegelfußabdeckung abdeckende Dichtung (Fig. 1 c) nach dem Stand der Technik.
- Fig. 2: eine perspektivische Ansicht einer wenigstens eine Partie mindestens einer karosserieseitig zur Anlage kommenden Fläche eines Spiegelfußes und einer Spiegelfußabdeckung abdeckenden und verliersicher mit der Spiegelfußabdeckung verbundenen Dichtung in einem auseinandergeklappten, ersten unmontierten Zustand der Außenrückblickspiegelanordnung, bevor der mit der Spiegelfußabdeckung verkleidete Spiegelfuß karosserieseitig am Kraftfahrzeug montiert wird.
- Fig. 3: eine perspektivische Ansicht der Dichtung aus Fig. 2 in einem aufeinandergeklappten, zweiten unmontierten Zustand der Außenrückblickspiegelanordnung, bevor der mit der Spiegelfußabdeckung verkleidete Spiegelfuß karosserieseitig am Kraftfahrzeug montiert wird.

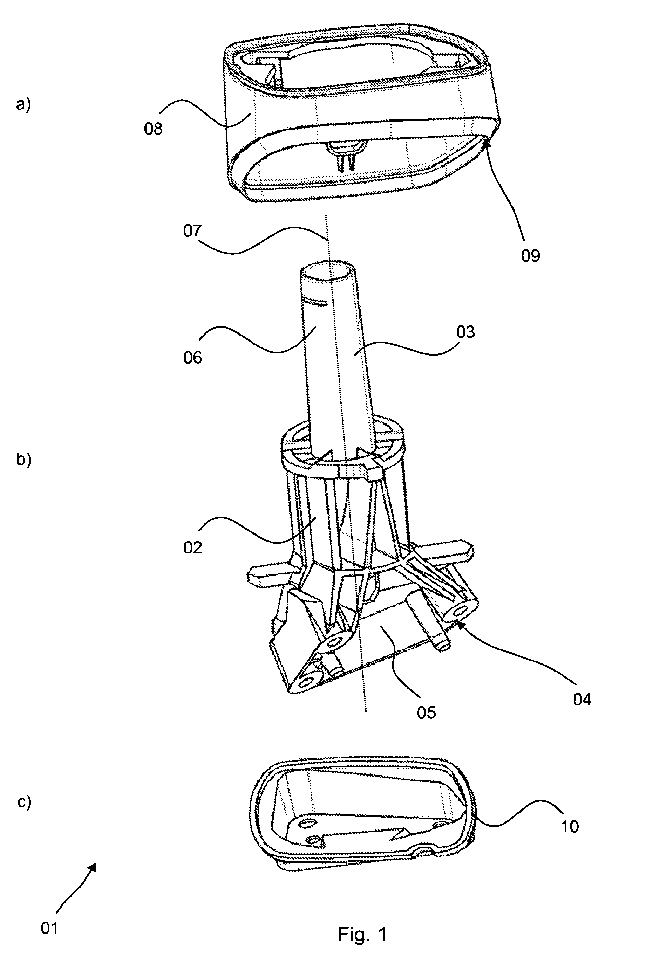

Ein in den Fig. 1 bis 3 dargestellter, an einem Karosserieteil eines Kraftfahrzeugs zu montierender Teil 01 einer Außenrückblickspiegelanordnung umfasst einen Spiegelfuß 02 mit einen spiegelfußseitigen Element 03 einer gelenkigen Verbindung zwischen Spiegelfuß 02 und einem beispielsweise in einem Außenrückblickspiegelgehäuse eines Außenrückblickspiegels der Außenrückblickspiegelanordnung beherbergten Grundträger sowie eine bei bestimmungsgemäßer Anbringung an dem Karosserieteil des Kraftfahrzeugs karosserieseitig zur Anlage kommende Fläche 04. In der Fläche 04 können beispielsweise zur Materialeinsparung und zur damit einhergehenden Gewichtseinsparung Aussparungen 05 vorgesehen sein. Bei dem spiegelfußseitigen Element 03 der gelenkigen Verbindung handelt es sich beispielsweise um einen z.B. kegelstumpfförmigen Zapfen 06. Die Achse des kegelstumpfförmigen Zapfens 06 bildet hierbei eine Gelenkachse 07 der gelenkigen Verbindung. Der Außenrückblickspiegel ist um die Gelenkachse 07 aus einer Betriebsstellung in eine Anklappstellung und umgekehrt verschwenkbar.

Der Spiegelfuß 02 ist mittels einer Spiegelfußabdeckung 08 wenigstens zum Teil verkleidet. Auch der Spiegelfuß kann eine bei bestimmungsgemäßer Anbringung an dem Karosserieteil des Kraftfahrzeugs karosserieseitig zur Anlage kommende Fläche 09 aufweisen.

Bei der Anbringung der Außenrückblickspiegelanordnung bzw. des Teils 01 der Außenrückblickspiegelanordnung an einem Karosserieteil eines Kraftfahrzeugs ist vorgesehen, wenigstens den Spiegelfuß 02 gegenüber dem Karosserieteil abzudichten. Dies kann unter gleichzeitiger Abdichtung einer in dem Karosserieteil vorgesehenen Durchführungsöffnung für einen vom Spiegelfuß 02 kommenden Kabelbaum der Außenrückblickspiegelanordnung geschehen.

Hierzu ist eine Dichtung 10 vorgesehen, welche zumindest eine Partie der mindestens einen karosserieseitig zur Anlage kommenden Fläche 04 des Spiegelfußes 02 und/oder der karosserieseitig zur Anlage kommenden Fläche 09 der Spiegelfußabdeckung 08 abdeckt. Die Dichtung 10 wird dabei vor der Anordnung des an dem Karosserieteil des Kraftfahrzeugs zu montierenden Teils 01 der Außenrückblickspiegelanordnung an dem Karosserieteil beispielsweise über die zumindest abzudeckende Partie der mindestens einen Fläche 04, 09 gestülpt oder auf diese gelegt. Auch andere Vorgehensweisen zur Anordnung der Dichtung 10 auf der zumindest abzudeckenden Partie der mindestens einen Fläche 04, 09 sind denkbar.

Beim in Fig. 1 dargestellten Stand der Technik besteht die Gefahr, dass die aus einem elastischen, beispielsweise gummiartigen, gegebenenfalls aufgeschäumten Werkstoff oder Werkstoffmix hergestellte Dichtung 10 beispielsweise beim Entformen oder beim Umgang gegebenenfalls notwendigerweise oder unbeabsichtigt umgestülpt werden kann. Wird dies bei der Abdeckung der Fläche 04 und/oder der Fläche 09 vor der Montage des Teils 01 am Karosserieteil nicht bemerkt, so kann dies zu einer mangelhaften Abdichtung gegenüber dem Karosserieteil führen. Ein beispielhafter Grund für diesen Mangel ist, dass z.B. in der Dichtung vorgesehene Öffnungen für einen Kabelbaum oder für z.B. zur Verbindung mit dem Karosserieteil vorgesehene Schraubverbindungen etc. bei den meisten Außenrückblickspiegelanordnungen nicht symmetrisch angeordnet sind, sondern z.B. einseitig versetzt z.B. zu einem Mittelpunkt. Dies kann zu ähnlichem, aber nicht identischen Aussehen im umgestülpten Zustand führen, wodurch es zu dem beschriebenen Mangel in der Abdichtung kommen kann. Darüber hinaus besteht beim in Fig, 1 dargestellten Stand der Technik die Gefahr, dass die Dichtung 10 um die Gelenkachse 07 verdreht fehlerhaft montiert werden kann, mit der selben Folge einer mangelhaften Abdichtung.

Außerdem kann die Dichtung 10 schlicht vergessen oder vor oder während der Montage des Teils 01 am Karosserieteil unbemerkt verloren gehen. Auch dies hat eine mangelhafte Abdichtung zur Folge.

Unter Anderem um eine mangelhafte Abdichtung zu vermeiden, ist bei wie in den

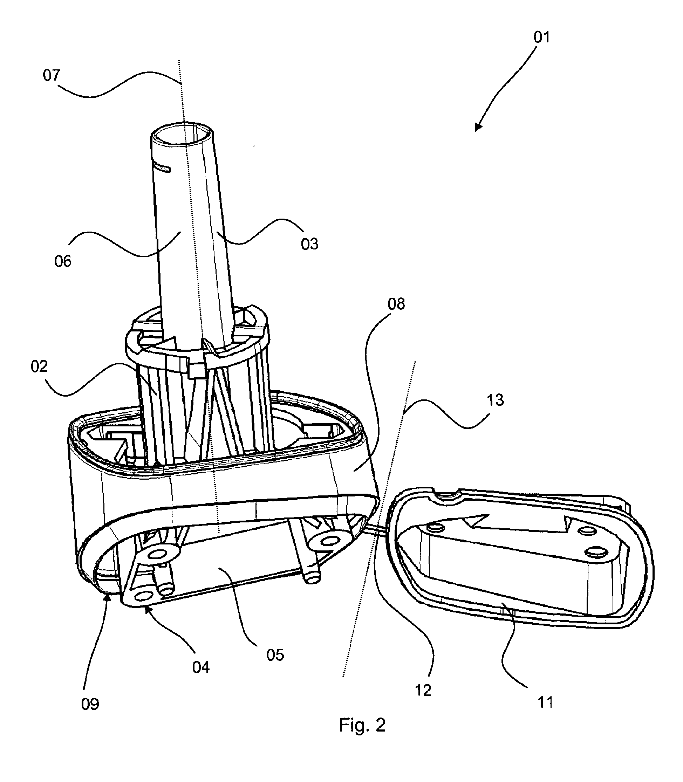

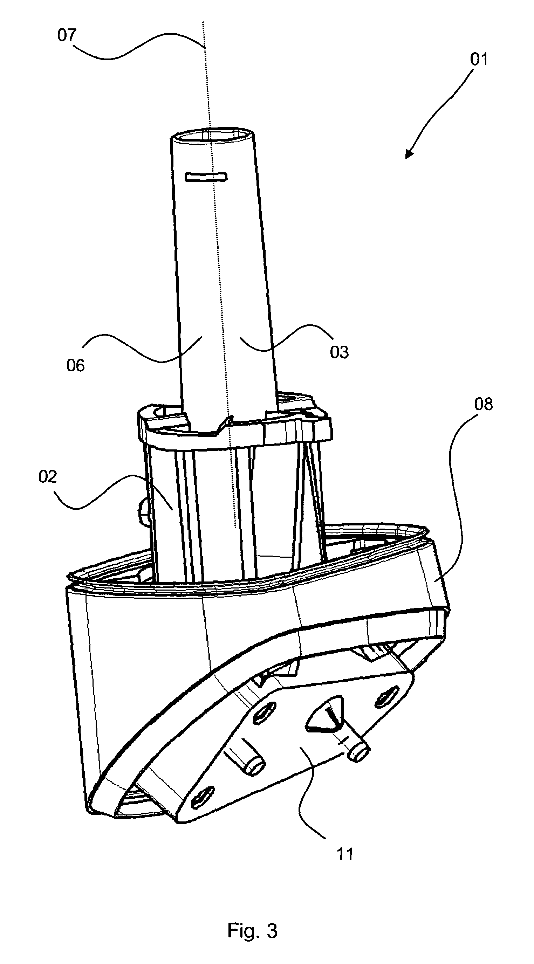

Fig. 2 und 3 dargestellt vorgesehen, eine zur Abdeckung zumindest einer Partie wenigstens einer karosserieseitig anliegenden Fläche 04, 09 des Spiegelfußes 02 und/oder der Spiegelfußabdeckung 08 vorgesehene Dichtung 11 mittels wenigstens einer Lasche 12 verliersicher mit dem Spiegelfuß 02 und/oder der Spiegelfußabdeckung 08 zu verbinden.

Die zumindest eine Lasche 12 bildet eine scharnierartige, gelenkige Verbindung mit wenigstens einer zu der karosserieseitig zur Anlage kommenden Fläche 04, 09 benachbart verlaufenden Scharnierachse 13. Die Dichtung 11 ist um die mindestens eine Scharnierachse 13 auf die zumindest abzudeckende Partie der mindestens einen karosserieseitig zur Anlage kommende Fläche 04, 09 klappbar.

Die wenigstens eine Scharnierachse 13 kann wie in Fig. 2 gezeigt außerhalb der mindestens einen karosserieseitig zur Anlage kommenden Fläche 04, 09 verlaufen.

Die Dichtung 11 ist um die mindestens eine Scharnierachse 13 lagerichtig und positionsgenau auf die zumindest abzudeckende Partie der mindestens einen karosserieseitig zur Anlage kommende Fläche 04, 09 klappbar. Hierdurch werden die beim Stand der Technik auftretenden Nachteile mangelhafter Abdichtungen wirkungsvoll vermieden weil:
- die mittels der Lasche 12 mit dem Spiegelfuß 02 und/oder der Spiegelfußabdeckung 08 verbundene Dichtung 11 vor oder während der Montage des Teils 01 am Karosserieteil nicht vergessen oder unbemerkt verloren gehen kann.
- die mindestens eine Lasche 12 eine Lehre bildet, welche beim Klappen um die mindestens eine Scharnierachse 13 die richtige Seite vorgibt, mit der die Dichtung 11 auf die zumindest abzudeckende Partie der mindestens einen karosserieseitig zur Anlage kommende Fläche 04, 09 zu liegen kommt.
- die mindestens eine Lasche 12 eine Lehre bildet, welche beim Klappen um die mindestens eine Scharnierachse 13 die verdrehrichtige Lage um die Gelenkachse 07 vorgibt.

Zusätzlich kann die mindestens eine Lasche 12 so ausgestaltet sein, dass sie eine in ihrer Position und Orientierung gegenüber der karosserieseitig zur Anlage kommenden Fläche 04, 09 definierte Scharnierachse 13 bildet.

Bevorzugt ist die Dichtung 11 dabei mittels der mindestens einen Lasche 12 verliersicher an der Spiegelfußabdeckung 08 angeordnet. Besonders bevorzugt sind dabei die Dichtung 11, die mindestens eine Lasche 12 und die Spiegelfußabdeckung 08 einstückig ausgeführt. Dies ist beispielsweise vermittels einer Herstellung von einstückiger Dichtung 11, Lasche 12 und Spiegelfußabdeckung 08 in einem Zwei- oder Mehrkomponentenspritzgussverfahren möglich. Hierbei kann die Spiegelfußabdeckung aus einem festen Werkstoff oder Werkstoffmix, die Lasche aus einem elastischen Werkstoff oder Werkstoffmix und die Dichtung ebenfalls aus einem gegebenenfalls aufgeschäumten elastischen Werkstoff oder Werkstoffmix hergestellt sein.

Die Erfindung ist insbesondere im Bereich der Herstellung von Außenrückblickspiegelanordnungen für Kraftfahrzeuge gewerblich anwendbar.

### Bezugszeichenliste

- 01: Teil einer Außenrückblickspiegelanordnung
- 02: Spiegelfuß
- 03: Element einer gelenkigen Verbindung
- 04: karosserieseitig zur Anlage kommende Fläche des Spiegelfußes
- 05: Aussparung
- 06: Zapfen
- 07: Gelenkachse
- 08: Spiegelfußabdeckung
- 09: karosserieseitig zur Anlage kommende Fläche der Spiegelfußabdeckung
- 10: Dichtung
- 11: Dichtung
- 12: Lasche
- 13: Scharnierachse

## Patentansprüche

1. Außenrückblickspiegelanordnung mit einem Spiegelfuß (02) und/oder einer Spiegelfußabdeckung, mit einer Dichtung (11) eines Teils (01) einer Außenrückblickspiegelanordnung gegenüber einem Karosserieteil eines Kraftfahrzeugs, welche Dichtung (11) zur Abdeckung wenigstens einer Partie mindestens einer karosserieseitig zur Anlage kommenden Fläche (04, 09) eines Spiegelfußes (02) und/oder einer Spiegelfußabdeckung (08) vorgesehen ist,
**dadurch gekennzeichnet,**
**dass** die Dichtung (11) mittels wenigstens einer Lasche (12) verliersicher mit dem Spiegelfuß (02) und/oder der Spiegelfußabdeckung (08) verbunden ist, wobei die zumindest eine Lasche (12) eine wenigstens eine zu der mindestens einen karosserieseitig zur Anlage kommenden Fläche (04, 09) benachbart verlaufende Scharnierachse (13) umfassende scharnierartige gelenkige Verbindung bildet, und wobei die Dichtung (11) um die mindestens eine Scharnierachse (13) auf die zumindest abzudeckende Partie der mindestens einen karosserieseitig zur Anlage kommende Fläche (04, 09) klappbar ist.

2. Außenrückblickspiegelanordnung nach Anspruch 1,
**dadurch gekennzeichnet,**
**dass** die wenigstens eine Scharnierachse (13) beispielsweise an einem Rand oder außerhalb der mindestens einen karosserieseitig zur Anlage kommenden Fläche (04, 09) verläuft.

3. Außenrückblickspiegelanordnung nach Anspruch 1 oder 2,
**dadurch gekennzeichnet,**
**dass** die Dichtung (11) um die mindestens eine Scharnierachse (13) lagerichtig und positionsgenau auf die zumindest abzudeckende Partie der mindestens einen karosserieseitig zur Anlage kommende Fläche (04, 09) klappbar ist.

4. Außenrückblickspiegelanordnung nach Anspruch 1, 2 oder 3,
**dadurch gekennzeichnet,**
**dass** die mindestens eine Lasche (12) eine in ihrer Position und Orientierung gegenüber der mindestens einen karosserieseitig zur Anlage kommenden Fläche (04, 09) definierte Scharnierachse (13) bildet.

5. Außenrückblickspiegelanordnung nach Anspruch 9, 2 oder 3,
**dadurch gekennzeichnet,**
**dass** die mindestens eine Lasche (12) eine Schaar von Scharnierachsen (13) mit unterschiedlichen Positionen und/oder Orientierungen gegenüber der mindestens einen karosserieseitig zur Anlage kommenden Fläche (04, 09) bildet.

6. Außenrückblickspiegelanordnung nach einem der vorhergehenden Ansprüche,
**dadurch gekennzeichnet,**
**dass** die Dichtung (11) mittels der mindestens einen Lasche (12) verliersicher an einer Spiegelfußabdeckung (08) angeordnet ist.

7. Außenrückblickspiegelanordnung nach Anspruch 6,
**dadurch gekennzeichnet,**
**dass** die Dichtung (11), die mindestens eine Lasche (12) und die Spiegelfußabdeckung (08) einstückig ausgeführt sind.

8. Außenrückblickspiegelenordnung nach Anspruchs 7,
**dadurch gekennzeichnet,dass** die Dichtung (11), die mindestens eine Lasche (12) und die Spiegelfußabdeckung (08) mittels eines Zwei- oder Mehrkomponentenspritzgussverfahrens einstückig ausgeführt sind.

9. Außenrückblickspiegelanordnung nach einem der Ansprüche 1 bis 5.
**dadurch gekennzeichnet,**
**dass** die Dichtung (11) mittels der mindestens einen Lasche (12) verliersicher an einem Spiegelfuß (02) angeordnet ist.

10. Außenrückblickspiegelanordnung nach einem der vorhergehenden Ansprüche,
**dadurch gekennzeichnet,**
**dass** die mindestens eine Lasche (12) so lang ausgebildet ist, dass sie bei auf die abzudeckende Partie der mindestens einen karosserieseitig zur Anlage kommenden Fläche (04, 09) geklappter Dichtung (11) in an dem Karosserieteil montiertem Zustand des Teils (01) der Außenrückblickspiegelanordnung nicht über die äußere Kontur des Spiegelfußes (02) und/oder der Spiegelfußabdeckung (08) innerhalb der mindestens einen an dem Karosserieteil zur Anlage kommenden Fläche (04, 09) herausragt.

11. Außenrückblickspiegelanordnung nach einem der vorhergehenden Ansprüche,
**dadurch gekennzeichnet,**
**dass** die eine oder mehrere die Dichtung (11) und die Spiegelfußabdeckung (08) und/oder den Spiegelfuß (02) verliersicher miteinander verbindenden Laschen (12) integral an die Dichtung (11) angeformt sind.

12. Außenrückblickspiegelanordnung nach einem der vorhergehenden Ansprüche,
**dadurch gekennzeichnet,**
**dass** die Dichtung (11) für eine türbrüstungsmontierte oder für eine spiegeldreieckmontierte Außenrückblickspiegelanordnung vorgesehen ist.

13. Außbenrückblickspiegelanordnung einem der vornergehenden Ansprüche,
**dadurch gekennzeichnet,**
**dass** die Dichtung (11) und die mindestens eine Lasche (12) aus einem elastisch verformbaren Werkstoff oder Werkstoffmix bestehen.

14. Außenrückblickspiegelanordnung nach Anspruch 13,
**dadurch gekennzeichnet,**
**dass** der Werkstoff oder Werkstoffmix wenigstens im Bereich der Dichtung (11) aufgeschäumt ist.

## Claims

1. An external rear view mirror assembly with a mirror foot (02) and/or a mirror foot cover, with a seal (11) of a part (01) of an external rear view mirror assembly with respect to a vehicle body part of a motor vehicle, which seal (11) is provided for covering at least a part of at least one surface (04, 09) of a mirror foot (02) and/or of a mirror foot cover (08), said surface (04, 09) coming into contact with the vehicle body,
**characterized in that**
the seal (11) is captively connected to the mirror foot (02) and/or to the mirror foot cover (08) by means of at least one bracket (12), wherein the at least one bracket (12) forms a hinge-like articulated connection that comprises at least one hinge axis (13) that extends adjacent to the at least one surface (04, 09) that comes into contact with the vehicle body, and wherein the seal (11) can be folded about the at least one hinge axis (13) onto that part of the at least one surface (04, 09) which has to be covered at least, said surface (04, 09) coming into contact with the vehicle body.

2. An external rear view mirror assembly according to claim 1,
**characterized in that**
the at least one hinge axis (13) extends, e.g., on an edge of or outside the at least one surface (04, 09) that comes into contact with the vehicle body.

3. An external rear view mirror assembly according to claim 1 or 2,
**characterized in that**
the folding of the seal (11) onto that part of the at least one surface (04, 09) which has to be covered at least and about the at least one hinge axis (13) can be performed in such a manner that the seal (11) is correctly placed and precisely positioned, said surface (04, 09) coming into contact with the vehicle body.

4. An external rear view mirror assembly according to claim 1, 2 or 3,
**characterized in that**
the at least one bracket (12) forms a hinge axis (13), the position and orientation of said hinge axis (13) with respect to the at least one surface (04, 09) that comes into contact with the vehicle body being defined.

5. An external rear view mirror assembly according to claim 1, 2 or 3,
**characterized in that**
the at least one bracket (12) forms a family of hinge axes (13) having different positions and/or orientations with respect to the at least one surface (04, 09) that comes into contact with the vehicle body.

6. An external rear view mirror assembly according to any one of the preceding claims,
**characterized in that**
the seal (11) is captively arranged on a mirror foot cover (08) by means of the at least one bracket (12).

7. An external rear view mirror assembly according to claim 6,
**characterized in that**
the seal (11), the at least one bracket (12) and the mirror foot cover (08) are all in one piece.

8. An external rear view mirror assembly according to claim 7,
**characterized in that**
the seal (11), the at least one bracket (12) and the mirror foot cover (08) are manufactured in one piece by means of a bi-injection molding method or a multi-injection molding method.

9. An external rear view mirror assembly according to any one of claims 1 to 5,
**characterized in that**
the seal (11) is captively arranged on a mirror foot (02) by means of the at least one bracket (12).

10. An external rear view mirror assembly according to any one of the preceding claims,
**characterized in that**
the length of the at least one bracket (12) is selected such that the bracket (12) does not project - when the seal (11) is folded, when the part (01) of the external rear view mirror assembly is mounted on the vehicle body part, on that part of the at least one surface (04, 09) which has to be covered, said surface (04, 09) coming into contact with the vehicle body - over the outer contour of the mirror foot (02) and/or of the mirror foot cover (08) within the at least one surface (04, 09) that comes into contact with the vehicle body part.

11. An external rear view mirror assembly according to any one of the preceding claims,
**characterized in that**
the one bracket (12) or several brackets (12) that captively connect/s the seal (11) and the mirror foot cover (08) and/or the mirror foot (02) to each other is/are integrally molded with the seal (11).

12. An external rear view mirror assembly according to any one of the preceding claims,
**characterized in that**
the seal (11) is provided for an external rear view mirror assembly mounted on the outer window breast of the vehicle door or for a cheater-mounted external rear view mirror assembly.

13. An external rear view mirror assembly according to any one of the preceding claims,
**characterized in that**
the seal (11) and the at least one bracket (12) consist of an elastically deformable material or material mixture.

14. An external rear view mirror assembly according to claim 13,
**characterized in that**
the material or material mixture is foamed at least in the region of the seal (11).

## Revendications

1. Agencement de rétroviseur extérieur ayant une base de miroir (02) et/ou un couvercle de base de miroir, un joint d'étanchéité (11) d'une pièce (01) d'un agencement de rétroviseur extérieur en vis-à-vis d'une partie de carrosserie d'un véhicule à moteur, lequel joint d'étanchéité (11) est prévu pour recouvrir au moins une partie d'au moins une surface (04, 09) de la base de miroir (02) et/ou d'un couvercle de base de miroir (08) venant en contact avec la carrosserie de véhicule,
**caractérisé en ce que**
le joint d'étanchéité (11) est relié de manière sûre à la base de miroir (02) et/ou au couvercle de base de miroir (08) par l'intermédiaire d'au moins une liaison d'articulation (12), de sorte que la au moins une liaison d'articulation (12) forme au moins une connexion articulée analogue à une charnière, dont l'axe d'articulation (13) s'étend adjacent à la au moins une surface (04, 09) venant en contact avec la carrosserie de véhicule, et de sorte que le joint d'étanchéité (11) peut être replié autour du au moins un axe d'articulation (13) sur la au moins une partie devant être recouverte de la au moins une surface (04, 09) venant en contact avec la carrosserie de véhicule.

2. Agencement de rétroviseur extérieur selon la revendication 1,
**caractérisé en ce que**
le au moins un axe d'articulation (13) s'étend par exemple sur un bord ou une partie extérieure de la au moins une surface (04, 09) venant en contact avec la carrosserie de véhicule.

3. Agencement de rétroviseur extérieur selon les revendications 1 ou 2,
**caractérisé en ce que**
le joint d'étanchéité (11) peut être replié autour du au moins un axe d'articulation (13), au bon emplacement et dans la bonne position, sur la au moins une partie devant être recouverte de la au moins une surface (04, 09) venant en contact avec la carrosserie de véhicule.

4. Agencement de rétroviseur extérieur selon les revendications 1, 2 ou 3
**caractérisé en ce que**
la au moins une liaison d'articulation (12) forme un axe d'articulation défini (13), dans sa position et son orientation par rapport à la au moins une surface (04, 09) venant en contact avec la carrosserie de véhicule.

5. Agencement de rétroviseur extérieur selon les revendications 1, 2 ou 3,
**caractérisé en ce que**
la au moins une liaison d'articulation (12) forme un groupe d'axes d'articulation ayant différentes positions et/ou orientations par rapport à la au moins une surface (04, 09) venant en contact avec la carrosserie de véhicule.

6. Agencement de rétroviseur extérieur selon l'une quelconque des revendications précédentes,
**caractérisé en ce que**
le joint d'étanchéité (11) est agencé de manière sûre sur un couvercle de base de miroir (08) par l'intermédiaire de la au moins une liaison d'articulation (12).

7. Agencement de rétroviseur extérieur selon la revendication 6,
**caractérisé en ce que**
le joint d'étanchéité (11), la au moins une liaison d'articulation (12) et le couvercle de base de miroir (08) sont formés en un seul bloc.

8. Agencement de rétroviseur extérieur selon la revendication7,
**caractérisé en ce que**
le joint d'étanchéité (11), la au moins une liaison d'articulation (12) et le couvercle de base de miroir (08) sont formés en un seul bloc par l'intermédiaire d'un processus de moulage par injection de deux ou plus de deux composants.

9. Agencement de rétroviseur extérieur selon l'une quelconque des revendications 1 à 5,
**caractérisé en ce que**
le joint d'étanchéité (11) est agencé de manière sûre sur la base de miroir (02) par l'intermédiaire de la au moins une liaison d'articulation (12).

10. Agencement de rétroviseur extérieur selon l'une quelconque des revendications précédentes,
**caractérisé en ce que**
la au moins une liaison d'articulation (12) est conçue avec une longueur suffisante de sorte que lorsque le joint d'étanchéité (11) est rabattu sur la partie devant être recouverte de la au moins une surface (04, 09) venant en contact avec la carrosserie de véhicule, la pièce (01) de l'agencement de rétroviseur extérieur étant montée sur la carrosserie, elle ne fait pas saillie au-dessus du contour extérieur de la base de miroir (02) et/ou du couvercle de base de miroir (08) à l'intérieur de la au moins une surface (04, 09) venant en contact avec la carrosserie de véhicule.

11. Agencement de rétroviseur extérieur selon l'une quelconque des revendications précédentes,
**caractérisé en ce que**
les une ou plusieurs liaisons d'articulation (12), qui relient ensemble de manière sûre le joint d'étanchéité (11) et le couvercle de base de miroir (08) et/ou la base de miroir (02), sont moulées en un seul bloc sur le joint d'étanchéité (11).

12. Agencement de rétroviseur extérieur selon l'une quelconque des revendications précédentes,
**caractérisé en ce que**
le joint d'étanchéité (11) est prévu pour un agencement de rétroviseur extérieur monté sur un seuil de porte ou dans un triangle de miroir.

13. Agencement de rétroviseur extérieur selon l'une quelconque des revendications précédentes,
**caractérisé en ce que**
le joint d'étanchéité (11) et la au moins une liaison d'articulation (12) sont constitués d'un matériau, ou d'un mélange de matériaux élastiquement malléables.

14. Agencement de rétroviseur extérieur selon la revendication 13,
**caractérisé en ce que**
le matériau ou le mélange de matériaux est amené à l'état de mousse, au moins dans la zone du joint d'étanchéité (11).
